# EUROPÄISCHE PATENTSCHRIFT

(11) **EP 0 558 503 B1**
(45) Veröffentlichungstag und Bekanntmachung des Hinweises auf die Patenterteilung: **16.04.1997**
(21) Anmeldenummer: 91917944.0
(22) Anmeldetag: 23.10.1991
(51) Int. Cl.: B24B 23/04, B24D 15/02, F16B 2/24

(54) **VORRICHTUNG ZUM FESTSPANNEN VON SCHLEIFPAPIER AN EINEM SCHWINGSCHLEIFER**
DEVICE FOR CLAMPING ABRASIVE PAPER TO A VIBRATION SANDER
DISPOSITIF POUR LE SERRAGE DE PAPIER ABRASIF SUR UNE PONCEUSE VIBRANTE

(30) Priorität: 23.11.1990 DE 4037266
(43) Veröffentlichungstag der Anmeldung: 08.09.1993
(73) Patentinhaber: ROBERT BOSCH GMBH, 70442 Stuttgart (DE)
(72) Erfinder: WALZ, Heinz, D-7035 Waldenbuch (DE); HÄRLE, Vinzenz, D-7449 Neckartenzlingen (DE)
(86) Internationale Anmeldenummer: DE9100829
(87) Internationale Veröffentlichungsnummer: WO9209405

(56) Entgegenhaltungen:
- BE-A- 566 358
- US-A- 4 398 375

## Beschreibung

### Stand der Technik

Die Erfindung geht aus von einem Schwingschleifer nach der Gattung des Anspruchs 1.

Für einen solchen Schwingschleifer ist aus der US-PS 3 375 616 eine Schleifpapierhalterung bekannt, die einen unter Federwirkung stehenden, parallel zur Schleifplatte geführten Schieber hat, der kleine Bewegungen auch quer zu seiner hauptsächlichen Verschieberichtung zuläßt. Dieser Schieber liegt in seiner Ruhestellung mit einer Kante unterhalb einer Betätigungshandhabe an einer Anschlagfläche an. Dabei läßt er das Spannglied frei, damit dieses das Schleifpapier festklemmen kann. Zum Bewegen des Spanngliedes aus seiner Spannstellung heraus wird dieser Schieber parallel zur Schleifplatte eingeschoben. Dabei trifft seine innere Stirnfläche mit ihrer unteren Kante auf einen hochgebogenen Arm des Sperrgliedes, das schwenkbar an der Schleifplatte gelagert ist. Unter Überwindung seiner eigenen Feder und der Spannfeder des Spanngliedes muß nun mit dem Schieber das Spannglied in seine Abhebestellung bewegt werden. Ist diese Stellung erreicht, muß der Bedienende den Schieber gegen die drehende Komponente des sich auf ihm abstützenden Spanngliedes quer zu seiner Verschieberichtung in eine Raststellung bewegen und dort an einen Anschlag anhängen. Die hierzu vorhandene Anschlagkante ist relativ schmal und steht senkrecht zur Verschieberichtung, ohne Hinterschnitt. So ist diese Verriegelung nicht sicher genug, weil sie sich durch die beim Bestücken des Schwingschleifers mit Schleifpapier erforderlichen Hantierungen leicht lösen kann. Schon das Anstoßen an einen Werktisch oder eine ungewollte Berührung der Betätigungshandhabe des Schiebers können den Schieber zurückspringen lassen. Auf jeden Fall erfordert die Benutzung des Schiebers relativ viel Geschick, weil nacheinander zwei verschieden gerichtete Bewegungen gegen Federwirkung ausgeübt werden müssen. Hinzu kommt, daß die erforderliche, relativ große Verstellkraft parallel zur Schleifplatte aufgebracht werden muß, d.h., daß der Bedienende nicht gegen eine Auflage drücken kann, auf die der Schwingschleifer mit seiner Schleifplatte aufgesetzt ist. Das erschwert die Handhabung weiterhin beträchtlich. Schließlich erfordert diese Konstruktion mehrere Einzelteile mit eigenen Lagerungen bzw. Führungen, die aufeinander abgestimmt sein müssen. Das bedingt einen hohen Fertigungsaufwand.

Aus der US-A-4 398 375 ist ein gattungsgemäßer Schwingschleifer bekannt mit einer Schleifplatte und einer daran angebrachten Spannvorrichtung für das Schleifpapier, wobei die Spannvorrichtung einfach und kostengünstig als Blattfeder ausgestaltet ist, deren eines Ende auf dem Rücken der Schleifplatte befestigt ist und deren freies Ende als Griff dient.

Diese Vorrichtung hat den Nachteil, daß der Griff zum Spannen oder Lösen des Schleifpapiers von der Schleifplatte weggehalten werden muß, bis der Schleifpapierwechsel erledigt ist. Dazu muß mit einer Hand ständig die Spannvorrichtung geöffnet gehalten werden, so daß nicht beide Hände zum Einlegen des Schleifpapiers zur Verfügung stehen. Dies ist umständlich, erhöht den Zeitbedarf für den Werkzeugwechsel und vermindert die mögliche effektive Einsatzzeit des Schwingschleifers.

### Vorteile der Erfindung

Der erfindungsgemäße Schwingschleifer mit den Merkmalen des Anspruchs 1 hat gegenüber dem Stand der Technik den Vorteil der einfacheren, leichteren und ergonomisch besseren Bedienbarkeit beim Ein- und Ausspannen des Schleifpapiers. Dabei ist die Vorrichtung konstruktiv äußerst einfach aufgebaut und fertigungstechnisch preisgünstig, nämlich durch Herstellen aus einem einzigen Materialstück in einem einzigen Arbeitsgang, zu realisieren. Außerdem können mit dem erfindungsgemäßen Schwingschleifer hohe Klemmkräfte des Spannglieds auf das Schleifpapier übertragen werden. Damit wird das Schleifpapier besonders zuverlässig und sicher gehalten.

Durch die Merkmale der Unteransprüche sind vorteilhafte Ausgestaltungen des im Anspruch 1 beanspruchten Schwingschleifers möglich.

### Zeichnung

Die Erfindung ist nachfolgend anhand eines Ausführungsbeispieles mit zugehöriger Zeichnung erläutert. Die Zeichnung zeigt in Fig. 1 ein Ausführungsbeispiel eines Schwingschleifers gemäß der Erfindung, in Fig. 2 ein Ausführungsbeispiel einer Schleifplatte, Fig. 3 und 4 zwei Ausführungsbeispiele des Spanngliedes und Fig. 5 und 6 ein weiteres Ausführungsbeispiel der Schleifplatte in zwei Herstellungsphasen.

### Beschreibung des Ausführungsbeispiels

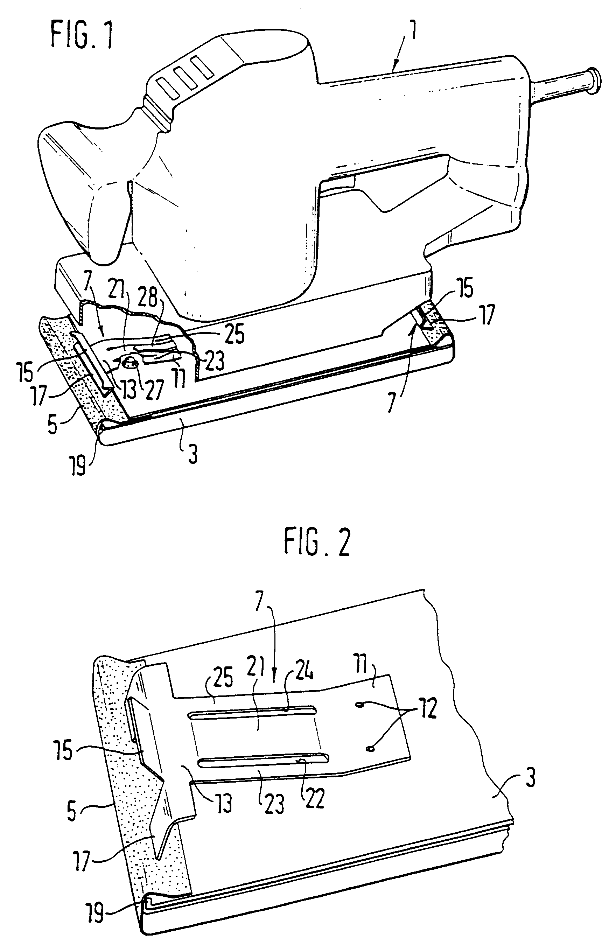

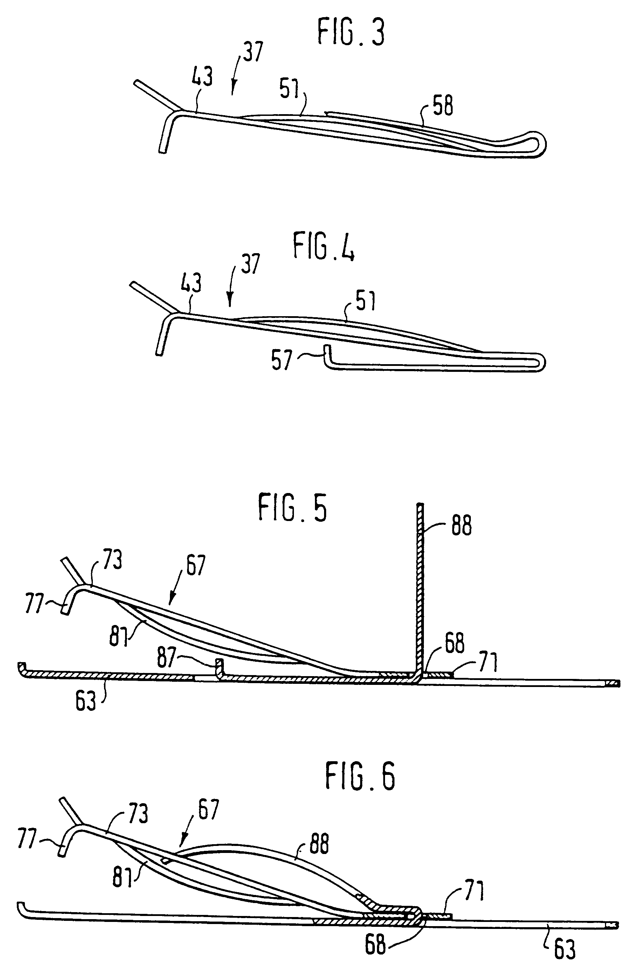

Der in Figur 1 dargestellte Schwingschleifer 1 hat eine Schleifplatte 3, deren untere, freie Fläche ein Schleifpapier 5 trägt. Dieses wird an seinen beiden Enden auf der Rückseite der Schleifplatte 3 mittels eines Spanngliedes 7 klemmend gehalten.

Das Spannglied 7 hat die Form einer Blattfeder, die als bistabiles Kippsprungwerk mit einem Ende 11 auf der Rückseite der Schleifplatte 3 nahe deren Rand befestigt ist, beispielsweise genietet, geschweißt, geschraubt oder durch Bördeln von aus der Schleifplatte 3 gestanzten Zungen. Ein dem Ende 11 gegenüberliegendes freies Ende 13 ist in zwei Abschnitte unterteilt. Ein erster Abschnitt, der von der Schleifplatte 3 wegragt, dient als Griffteil 15. Ein zweiter Abschnitt, der auf die Schleifplatte 3 weist, dient als Spannkralle 17 zum Festhalten des Schleifpapierendes. Der äußerste Rand der Schleifplatte 3 ist auf zwei gegenüberliegenden Seiten zumindestens bereichsweise aus seiner horizontalen Lage vertikal nach oben umgebogen und bildet eine Schwelle 19, über die das Schleifpapier 5 geführt ist.

Das Spannglied 7 hat einen sich längs erstreckenden Mittenbereich 21, der länger ist als die beiden ihm benachbarten Außenbereiche 23, 25, und der demzufolge gewölbt ist, so daß ein an sich bekanntes Element eines Kippsprungwerkes vorliegt.

Der Mitte des Mittenbereichs 21 benachbart, auf der Rückseite der Schleifplatte 3 ist ein unterer Anschlag 27 angeordnet, an dem sich der Mittenbereich 21 in der Lösestellung des Spanngliedes 7 abstützt.

Ein blattfederartiger oberer Anschlag 28 ist auf dem festen Ende 11 des Spanngliedes 7 auf der Rückseite der Schleifplatte 3 befestigt und erstreckt sich eng benachbart zum Spannglied 7 auf dessen der Schleifplatte 3 abgewandter Seite. Das freie Ende des oberen Anschlags 28 stützt sich sowohl in der Löse- als auch in der Spannstellung am konvexen Mittenbereich 21, etwa zwischen dessen Mitte und dem Griff 15, ab.

Über das Griffteil 15 kann das Spannglied 7 per Hand in eine jeweils stabile Löse- oder Spannstellung geschwenkt werden. In der Spannstellung ist der Mittenbereich 21 auf der der Rückseite der Schleifplatte 3 abgewandten Seite konvex, in der Lösestellung konkav gewölbt.

In der Spannstellung stützt sich die Spannkralle 17 auf das Ende des Schleifpapiers 5 gegen die Rückseite der Schleifplatte 3 ab. Das Ende des Schleifpapiers 5 ist über die Schwelle 19 ein kurzes Stück nach unten gerichtet zur Rückseite der Schleifplatte 3 geführt. Durch diese zusätzliche Umschlingung ist dem Schleifpapierende ein besonders sicherer Halt gegeben.

Mittels des unteren Anschlages 27 wird der zum Herstellen der Spannstellung des Spanngliedes 7 notwendige Betätigungshub am Griffteil 15 verkürzt. Mittels des oberen Anschlags 28 wird durch die Wahl des Abstützpunktes auf dem Mittenbereich 21 der zum Herstellen der Lösestellung des Spanngliedes 7 notwendige Betätigungshub am Griffteil 15 nicht beeinflußt, jedoch die Spannkraft des Spanngliedes 7 in der Spannstellung verstärkt und der Umschnapp-Schwenkwinkel definiert.

Zum Lösen der Spannstellung bzw. zum Herstellen der Lösestellung des Spanngliedes 7 ist, vorbestimmt durch die Dimensionierung und Positionierung des oberen Anschlages 28, ein größerer Betätigungshub am Griffteil 15 nötig als zum Herstellen der Spannstellung. Damit kann durch versehentliches Anstoßen oder Hängenbleiben des Griffteils 15 die Spannstellung nicht gelöst werden. Ein ungewolltes Lösen des Schleifpapiers 5 beim Arbeiten mit dem Schwingschleifer würde zu Beschädigungen des Schleifpapieres 5 oder der zu bearbeitenden Fläche führen. Dies zu vermeiden ist besonders bei schwierigen Arbeitspositionen, beispielsweise bei Überkopfarbeiten, wichtig und mit der Spannvorrichtung gesichert.

In Figur 2 ist ein Abschnitt der Schleifplatte 3 mit dem in Spannstellung befindlichen Spannglied 7 gezeigt. Die Trennung des Mittenbereiches 21 von den Außenbereichen 23, 25 durch Durchbrüche 22, 24 wird hier besonders deutlich. Die am Ende 11 des Spanngliedes vorhandenen Punktschweißstellen 12 stellen ein feste Verbindung zur Schleifplatte 3 her. Die in Figur 2 mit Figur 1 übereinstimmenden Teile tragen ihre ursprünglichen Bezugsziffern.

In den Figuren 3 und 4 sind zwei Ausführungsbeispiele des Spanngliedes 37 je mit freiem Ende 43, Mittenbereich 51, Anschlag 57 bzw. mit Anschlagblech 58 als einstückiges Biegeteil gezeigt. In dieser Ausgestaltung ist das Spannglied einfach herstellbar und günstig montierbar.

In den Figuren 5 und 6 ist je ein Ausführungsbeispiel einer Schleifplatte 63 mit Spannglied 67 in der Lösestellung gezeigt. Aus der Schleifplatte 63 ragen gestanzte, einen unteren bzw. oberen Anschlag 87, 88 bildende Zungen heraus. Die den Anschlag 88 bildende Zunge tritt durch eine Ausnehmung 68 im Spannglied 67 und ist zugleich Lappen einer Lappenverbindung um auf der Schleifplatte 63 das Spannglied 67 festzuhalten und gleichzeitig dessen Federkraft zu verstärken.

Das Ausführungsbeispiel gemäß Figur 6 trägt keinen unteren Anschlag. Es zeigt den in Figur 5 vorgebogenen oberen Anschlag 88 im Endzustand als Lappenverbindung und zum freien Ende 73 des Spanngliedes 67 hin gebogen. Mit seinem eigenen freien Ende berührt er in der Lösestellung das Spannglied 67 gerade noch. An seiner Umbiegung an der Ausnehmung 68 des Spanngliedes 67 hält er dessen festes Ende 71 auf der Schleifplatte 63 fest, wie dies allerdings in weiteren, nicht dargestellten Ausführungsbeispielen durch eine Schweiß-, Löt-, Bördel-, und/oder Klebeverbindung gelöst sein könnte.

Beim Schwenken in die Spannstellung springt der Mittenbereich 81 in eine zum oberen Anschlag 88 konvexe Stellung und stützt sich daran ab. Dadurch wird die Spannkraft an der Spannkralle 77 verstärkt und das Schleifpapier besonders sicher gehalten.

Bei einem nicht dargestellten Ausführungsbeispiel der Erfindung ist das Spannglied eine Blattfeder ohne Mittenbereich mit zwei gewölbten, zusammenführenden Außenbereichen, deren Enden eine Spannkralle tragen. Die beiden Anschläge sind einstückig am Spannglied vorhanden.

Bei einem weiteren, nichtdargestellten Ausführungsbeispiel kann das Spannglied aus mehreren, unterschiedlichen Materialien zusammengefügt sein, wobei der Griff aus angespritztem oder angegossenem Kunststoff besteht. Die Anschläge sind hier wahlweise angeordnet.

Weitere mögliche Ausführungsbeispiele können durch Verwendung allgemein bekannter, in vielfältigen Formen entwickelter, bistabiler Kippsprungwerke, auf der technischen Lehre der Erfindung aufbauend, ohne erfinderische Tätigkeit verwirklicht werden.

## Patentansprüche

1. Schwingschleifer (1) mit einer Schleifplatte (3) und einer daran angebrachten Spannvorrichtung (7, 15) für das Schleifpapier (5), die wahlweise in eine Spann- oder eine Lösestellung stellbar ist und die ein Spannglied (7) besitzt, das zum Betätigen einen Griffteil (15) aufweist, dadurch gekennzeichnet, daß das Spannglied (7) ein bistabiles Kippsprungwerk ist, dessen eines Ende (11) auf der Rückseite der Schleifplatte (3) befestigt ist und dessen anderes, freies Ende (13) sich über der Rückseite der Schleifplatte (3) erstreckend zumindest abschnittsweise in der Spannstellung auf der Rückseite der Schleifplatte (3) abstützt.

2. Schwingschleifer nach Anspruch 1, dadurch gekennzeichnet, daß das Kippsprungwerk als zumindest teilweise durch Wölbung verspannte, elastische Platte ausgestaltet ist.

3. Schwingschleifer nach Anspruch 2, dadurch gekennzeichnet, daß das Spannglied (7) in Gestalt der Platte ein längliches, ebenes Blechteil mit zwei Enden (11, 13) an den Längsseiten ist, dessen Mittenbereich (21) durch zwei Durchbrüche (22, 24) von zwei Außenbereichen (23, 25) getrennt ist, wobei der Mittenbereich (21) länger als die Außenbereiche (23, 25) ist.

4. Schwingschleifer nach Anspruch 3, dadurch gekennzeichnet, daß das Spannglied (7) aus mehreren Blech-Teilstücken zusammengesetzt ist.

5. Schwingschleifer nach einem der vorhergehenden Ansprüche, dadurch gekennzeichnet, daß bei von der Schleifplatte (3) weggewölbtem Mittenbereich (21) des Spanngliedes (7) die Spannstellung und bei zur Schleifplatte (3) hin gewölbtem Mittenbereich (21) die Lösestellung des Spanngliedes (7) hergestellt ist.

6. Schwingschleifer nach einem der vorhergehenden Ansprüche, dadurch gekennzeichnet, daß der Schwenkbereich des Spanngliedes (7) durch mindestens einen Anschlag (27, 28) begrenzt ist, der auf der konvexen Wölbung, insbesondere dem gewölbtem Mittenbereich (21), aufliegend den Umschnapp-Schwenkwinkel des Kippsprungwerkes bestimmt.

7. Schwingschleifer nach einem der vorhergehenden Ansprüche, dadurch gekennzeichnet, daß der Schwenkbereich des Spanngliedes (7) auf jeder Schwenkseite durch je einen unteren und/oder oberen Anschlag (27, 28) begrenzt ist.

8. Schwingschleifer nach Anspruch 6, dadurch gekennzeichnet, daß sich die Anschläge (27, 28) auf jeweils gegenüberliegenden Seiten des Spanngliedes (7) an dessen konvexem Mittenbereich (21) abstützen.

9. Schwingschleifer nach Anspruch 6, dadurch gekennzeichnet, daß mindestens einer Anschläge (27, 28) einstückig mit dem als Biegeteil ausgestatteten Spannglied (7) ist.

10. Schwingschleifer nach einem der Ansprüche 1 bis 9, dadurch gekennzeichnet, daß die Anschläge (87, 88) zungenartig aus der Schleifplatte (63) ragen, wobei mindestens einer der Anschläge (87, 88) das feste Ende (71) des Spanngliedes (67) auf der Schleifplatte (63) hält und insbesondere eine Lappenverbindung bildet.

11. Schwingschleifer nach einem der vorhergehenden Ansprüche, dadurch gekennzeichnet, daß die dem Spannglied (7) zugewandte Seite der Schleifplatte (3) an ihrem Rand eine, insbesondere als hochgebogenes Ende der Schleifplatte (3, 63) ausgebildete, Schwelle (19) nahe dem Abstützpunkt des freien Endes (13) des Spanngliedes (7) trägt, über die das Schleifpapier (5) geführt ist.

12. Schwingschleifer nach einem der vorhergehenden Ansprüche, dadurch gekennzeichnet, daß das Spannglied (7) an seinem freien Ende (13) ein gesondertes Griffteil (15), insbesondere aus Kunststoff, trägt.

## Claims

1. Vibration sander (1) having a sanding pad (3) and a clamping device (7, 15) attached thereto for the abrasive paper (5), which clamping device can optionally be set to a clamping or release setting and possesses a clamping member (7) which, for actuation purposes, has a grip part (15), characterized in that the clamping member (7) is a bistable spring-action tilt mechanism, the one end (11) of which is fastened on the back of the sanding pad (3) and the other, free end (13) of which, in the clamping setting, is supported at least in portions on the back of the sanding pad (3), extending over the back of the sanding pad (3).

2. Vibration sander according to Claim 1, characterized in that the spring-action tilt mechanism is designed as an elastic plate which is braced, at least partially, by arching.

3. Vibration sander according to Claim 2, characterized in that the clamping member (7) in the form of the plate is an elongated, flat sheet-metal part having two ends (11, 13) on the longitudinal sides, the middle region (21) of which sheet-metal part is separated from two outer regions (23, 25) by two apertures (22, 24), the middle region (21) being longer than the outer regions (23, 25).

4. Vibration sander according to Claim 3, characterized in that the clamping member (7) is composed of a plurality of sheet-metal part-pieces.

5. Vibration sander according to one of the preceding claims, characterized in that, when the middle region (21) of the clamping member (7) is arched away from the sanding pad (3), the clamping setting is created and, when the middle region (21) is arched towards the sanding pad (3), the release setting of the clamping member (7) is created.

6. Vibration sander according to one of the preceding claims, characterized in that the range of swivel of the clamping member (7) is limited by at least one stop (27, 28), which, resting on the convex arching, especially the arched middle region (21), determines the snap-over angle of swivel of the spring-action tilt mechanism.

7. Vibration sander according to one of the preceding claims, characterized in that the range of swivel of the clamping member (7) is limited on each swivel side by respectively a lower and/or upper stop (27, 28).

8. Vibration sander according to Claim 6, characterized in that the stops (27, 28) are supported on respectively opposing sides of the clamping member (7) against its convex middle region (21).

9. Vibration sander according to Claim 6, characterized in that at least one of the stops (27, 28) is integral with the clamping member (7) designed as a bending part.

10. Vibration sander according to one of Claims 1 to 9, characterized in that the stops (87, 88) jut in a tongue-like fashion out of the sanding pad (63), at least one of the stops (87, 88) holding the fixed end (71) of the clamping member (67) on the sanding pad (63) and, in particular, forming a staked joint.

11. Vibration sander according to one of the preceding claims, characterized in that that side of the sanding pad (3) facing the clamping member (7) bears at its margin, close to the point of support of the free end (13) of the clamping member (7), a ridge (19), which is configured as a bent-up end of the sanding pad (3, 63) and over which the abrasive paper (5) is led.

12. Vibration sander according to one of the preceding claims, characterized in that the clamping member (7) bears at its free end (13) a separate grip part (15), in particular made of plastic.

## Revendications

1. Ponceuse vibrante (1) avec un plateau de ponçage (3) et un dispositif de serrage, mis dessus, (7, 15) pour le papier de ponçage (5), que l'on peut mettre au choix dans une position de serrage ou de desserrage et qui possède un organe de serrage (7), qui présente une poignée (15) d'actionnement,
caractérisé en ce que
l'organe de serrage (7) est un dispositif de basculement bistable à saut brusque, dont une extrémité (11) est fixée sur le verso du plateau de ponçage (3) et dont l'autre extrémité, libre, (13) s'appuie sur le verso du plateau de ponçage (3) en s'étendant au moins de façon fragmentaire dans la position de serrage sur le verso du plateau de ponçage (3).

2. Ponceuse vibrante selon la revendication 1,
caractérisée en ce que
le mécanisme de basculement à saut brusque est constitué au moins en partie par le bombement d'une plaque élastique, tendue.

3. Ponceuse vibrante selon la revendication 2,
caractérisée en ce que
l'organe de serrage (7) en forme de plaque est une tôle plane, allongée avec deux extrémités (11, 13) sur les côtés longitudinaux, dont la zone centrale (21) est séparée par deux ajours (22, 24) de deux zones extérieures (23, 25), la zone centrale (21) étant plus longue que les zones extérieures (23, 25).

4. Ponceuse vibrante selon la revendication 3,
caractérisée en ce que
l'organe de serrage (7) se compose de plusieurs pièces partielles en tôle.

5. Ponceuse vibrante selon l'une des revendications précédentes,
caractérisée en ce que
dans le cas de la zone centrale (21) de l'organe de serrage (7), qui en se bombant s'écarte du plateau de ponçage (3) on établit la position de serrage et dans le cas de la zone centrale (21) qui se bombe en direction du plateau de ponçage (3) on établit la position de desserrage de l'organe de serrage (7).

6. Ponceuse vibrante selon l'une des revendications précédentes,
caractérisée en ce que
la zone de pivotement de l'organe de serrage (7) est limitée par au moins une butée (27, 28), qui détermine en reposant sur le bombement convexe, en particulier sur la zone centrale bombée (21), l'angle de pivotement du dispositif de basculement à saut brusque.

7. Ponceuse vibrante selon l'une des revendications précédentes,
caractérisée en ce que
la zone de pivotement de l'organe de serrage (7) est limitée sur chaque côté de pivotement par respectivement une butée inférieure et/ou une butée supérieure (27, 28).

8. Ponceuse vibrante selon la revendication 6,
caractérisée en ce que
les butées (27, 28) prennent appui sur respectivement les côtés opposés de l'organe de serrage (7) sur sa zone centrale convexe (21).

9. Ponceuse vibrante selon la revendication 6,
caractérisée en ce qu'
au moins l'une des butées (27, 28) est formée d'une seule pièce avec l'organe de serrage (7) constituée comme une pièce flexible.

10. Ponceuse vibrante selon l'une des revendications 1 à 9,
caractérisée en ce que
les butées (87, 88) font saillie à la manière de languettes à partir du plateau de ponçage (63), au moins l'une des butées (87, 88) maintenant l'extrémité libre (71) de l'organe de serrage (67) sur le plateau de ponçage (63) et en particulier formant une liaison d'agrafage.

11. Ponceuse vibrante selon l'une des revendications précédentes,
caractérisée en ce que
le côté du plateau de ponçage (3), qui est tourné vers l'organe de serrage (7) porte sur son bord un seuil (19) constitué en particulier sous la forme d'une extrémité recourbée verticalement du plateau de ponçage (3, 63) à proximité du point d'appui de l'extrémité libre (13) de l'organe de serrage (7), seuil au moyen duquel est guidé le papier de ponçage (5).

12. Ponceuse vibrante selon l'une des revendications précédentes,
caractérisée en ce que l'organe de serrage (7) porte à son extrémité libre (13) une poignée particulière (15), en particulier en matière plastique.
